# FASCICULE DE BREVET EUROPEEN

(11) **EP 3 108 321 B1**
(45) Date de publication et mention de la délivrance du brevet: **24.04.2019**
(21) Numéro de dépôt: 15705253.1
(22) Date de dépôt: 11.02.2015
(51) Int. Cl.: G05D 23/19, H05B 1/02

(54) **DISPOSITIF DE COMMANDE D'AU MOINS UN APPAREIL DE CHAUFFAGE ÉLECTRIQUE**
VORRICHTUNG ZUR STEUERUNG VON WENIGSTENS EINER ELEKTRISCHEN HEIZEINRICHTUNG
DEVICE FOR CONTROLLING AT LEAST ONE ELECTRICAL HEATING APPLIANCE

(30) Priorité: 21.02.2014 FR 1451405
(43) Date de publication de la demande: 28.12.2016
(73) Titulaire: Electricité de France, 75008 Paris (FR)
(72) Inventeur: PENHOUET, David, 77210 Avon (FR); RYS, Didier, 77250 Veneux Les Sablons (FR); CLEMENCON, Bernard, 77210 Avon (FR)
(74) Mandataire: Regimbeau
(86) Numéro de dépôt international: PCT/EP2015/052842
(87) Numéro de publication internationale: WO 2015/124477

(56) Documents cités:
- WO-A1-2007/117245
- US-A1- 2008 277 487
- US-B1- 6 480 803

## Description

La présente invention se rapporte à un dispositif de commande d'au moins un appareil de chauffage.

Cette invention se situe dans le domaine particulier du pilotage d'au moins un appareil de chauffage électrique, en réponse à une demande d'effacement ou une sollicitation tarifaire.

Une « solution d'effacement » de consommation électrique, encore appelée « lissage de la courbe de charge par le pilotage de la demande », consiste essentiellement, lorsque l'on constate un déséquilibre entre l'offre et la demande d'électricité à, de manière provisoire, réduire la consommation physique d'un site donné ou d'une pluralité d'acteurs. Cet effacement est déclenché par une stimulation extérieure qui peut être une valeur de tarification de l'électricité élevée provenant d'un compteur « intelligent » ou bien d'un service internet, ou une valeur de pointe mobile avec ou sans préavis provenant d'un compteur « intelligent » ou bien d'un service internet.

Autrement dit, un effacement de consommation est un outil qui permet d'optimiser la consommation électrique en ne consommant pas d'électricité pendant une certaine durée ou alors de reporter sa consommation. Cela permet de soulager les puissances appelées aux heures de pointe et, de cette manière, d'écrêter les pics de consommation sans nécessiter de recourir à des moyens de production d'électricité supplémentaires.

De telles solutions d'effacement pour des appareils de chauffage à effet Joule dans des bâtiments du secteur tertiaire existent déjà sur le marché. Toutefois, ces solutions sont généralement coûteuses car elles nécessitent l'utilisation de plusieurs relais de puissance permettant de couper l'alimentation directe des convecteurs au niveau du tableau électrique qui équipe le bâtiment. Leur installation est également coûteuse car il est nécessaire de modifier le câblage de puissance.

Dans le document US 6 480 803 est décrite une méthode d'effacement selon laquelle un thermostat reçoit un ordre de délestage via un microprocesseur. En fonction du pic de consommation prévu, la température de consigne délivrée au thermostat tient compte des températures extérieure et intérieure mesurées et de paramètres tenant compte des caractéristiques de charge et pertes de calories du bâtiment.

La présente invention vise à combler la lacune explicitée plus haut.

Ainsi, la présente invention est relative notamment à une installation comportant un dispositif de commande d'un moins un appareil de chauffage électrique disposé dans un bâtiment, dont le fonctionnement est géré par un automatisme ayant une fonction de limitation d'énergie, cet automatisme transmettant audit appareil de chauffage des ordres de marche/arrêt, et/ou allures, et/ou consigne de fonctionnement en fonction de la température détectée à l'extérieur du bâtiment, par une première sonde.

Cette fonction, également appelée « anti gaspillage », permet de limiter le temps de fonctionnement (donc l'énergie consommée) d'un ensemble d'émetteurs électriques.

A titre d'exemple, ces appareils sont imposés en France par la réglementation thermique si la surface chauffée dépasse 400 m² (sauf si le chauffage est arrêté automatiquement en cas d'ouverture de l'un des ouvrants du bâtiment).

Cette installation se caractérise en ce qu'elle comporte au moins une sonde de température supplémentaire dont la valeur est calée sur une température prédéterminée en combinaison avec un temps de fonctionnement limité du chauffage, voire d'absence de chauffage, ainsi qu'un module comportant un micro-processeur qui, lorsqu'il reçoit une information extérieure d'effacement, est configuré pour transmettre audit appareil, par l'intermédiaire d'un second module, un ordre de commutation de la température extérieure mesurée provenant de ladite première sonde vers une valeur leurrée, c'est-à-dire imposée, provenant de ladite sonde de température supplémentaire pendant une durée prédéterminée.

Selon d'autres caractéristiques non limitatives et avantageuses de cette installation :
- ledit automatisme comprend un programmateur, un gestionnaire d'énergie ou un automate de régulation ;
- ladite au moins une sonde de température supplémentaire est calée sur une valeur de température supérieure à la première sonde et inférieure ou égale à une température correspondant à une absence de chauffage ;
- lesdites sondes de température sont des sondes de température à éléments résistifs de sortie résistante variable ou bien calée sur une valeur comprise dans la gamme 0-10V ;
- ladite information extérieure d'effacement reçue par ledit module est transmise par une liaison sans fil ou filaire ;
- ladite information extérieure d'effacement est transmise par un compteur électrique communicant ou par internet ;
- ledit appareil électrique est compris dans le groupe suivant :
   convecteur électrique, radiateur/panneau rayonnant électrique, radiateur à inertie, plancher et plafond à chauffage électrique intégré ou bien système thermodynamique type Pompe à Chaleur.

Un autre aspect de l'invention concerne un dispositif de commande d'au moins un appareil de chauffage électrique disposé dans un bâtiment, dont le fonctionnement est géré par un automatisme ayant une fonction de limitation d'énergie, cet automatisme transmettant audit appareil de chauffage des ordres de marche/arrêt, et/ou allures, et/ou consigne de fonctionnement en fonction de la température détectée à l'extérieur du bâtiment, par une première sonde, ce dispositif comprenant au moins une sonde de température supplémentaire dont la valeur est calée sur une température prédéterminée en combinaison avec un temps de fonctionnement limité du chauffage, voire d'absence de chauffage, ainsi qu'un module comportant un micro-processeur qui, lorsqu'il reçoit une information extérieure d'effacement, est configuré pour transmettre audit appareil par l'intermédiaire d'un second module, un ordre de commutation de la température mesurée provenant de ladite première sonde vers une valeur de température extérieure leurrée, c'est-à-dire imposée, provenant de ladite sonde de température supplémentaire pendant une durée prédéterminée.

D'autres caractéristiques et avantages de l'invention apparaîtront à la lecture de la description suivante d'un mode de réalisation préféré de l'invention qui est purement illustrative et non limitative, et qui doit être lue en regard des dessins annexés sur lesquels :
- la figure 1 est un schéma montrant une installation électrique de chauffage équipée d'un dispositif selon un mode de réalisation de l'invention.
- la figure 2 est un graphique qui représente le pourcentage de charge en fonction de la température extérieure (partie X), la valeur de la résistance correspondant à ladite température extérieure (partie Y) et la valeur d'une sortie 0-10V d'une sonde correspondant à ladite température extérieure (partie Z).

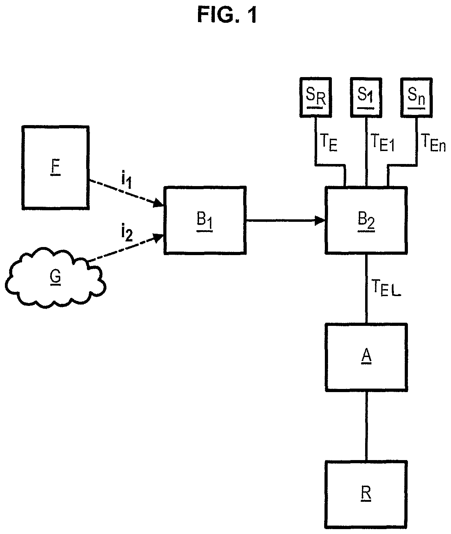

Sur la figure 1 est représentée schématiquement une installation électrique de chauffage équipant un bâtiment, par exemple à usage tertiaire.

On a ici affaire à au moins un appareil de chauffage électrique R. Pour la clarté du présent exposé, on considérera un seul appareil de chauffage. Mais il est bien entendu que, dans la réalité, plusieurs appareils R peuvent être présents, qu'ils soient de même type ou de nature différente.

Le fonctionnement de cet appareil R est géré par un automatisme A, connu en soi, qui possède une fonction de limitation d'énergie. On parle aussi d'automate de gestion d'énergie ou de "GTB" pour "Gestion Technique de Bâtiment".

Cette fonctionnalité de limitation d'énergie détermine, en fonction de la température extérieure, c'est-à-dire en dehors du bâtiment, et de réglages (consigne et écart), un pourcentage de charge qui, associé à une base de temps, produit une durée de mise en fonctionnement de chauffage qui varie selon les besoins.

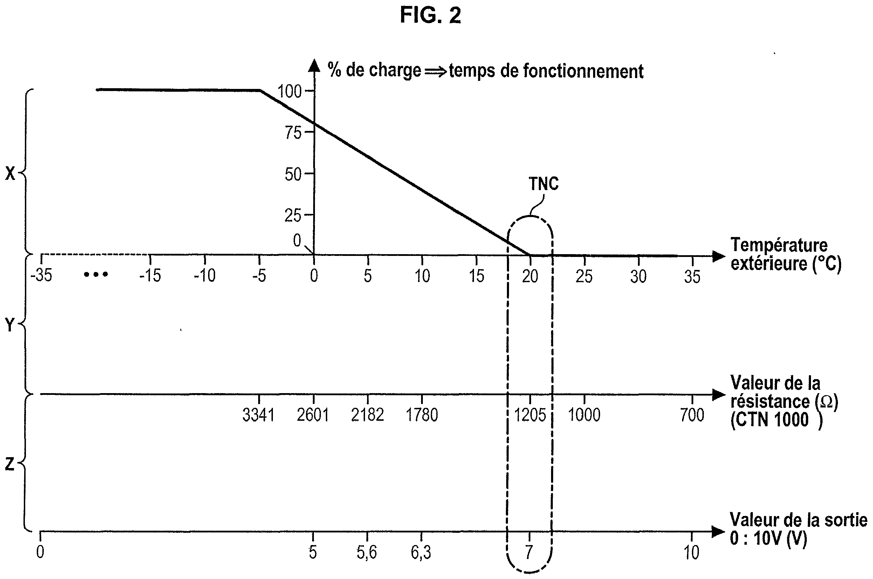

La partie X de la figure 2 représente, à titre illustratif, un exemple de loi de charge (c'est-à-dire de temps de fonctionnement autorisé) en fonction de la température extérieure. Ainsi, par exemple, si la température extérieure mesurée un matin est de 0°C, l'automatisme va déclencher un ordre de chauffage pendant une certaine durée (78% de la base de temps sur le graphique). Si, dans la même journée, par exemple dans l'après-midi, une température extérieure de 10°C (donc de valeur bien supérieure à 0°C) est mesurée, alors l'automatisme va gérer le fonctionnement des appareils de chauffage pour obtenir, dans le bâtiment, une température globale sensiblement identique à celle qui y régnait le matin et ceci en limitant le temps de fonctionnement des appareils de manière à éviter les augmentations locales de consigne, voir de limiter les consommations liées aux oublis d'ouverture de fenêtres.

Cette température extérieure est généralement mesurée par une sonde de température de type connu, par exemple de type résistif. Dans certains cas, cette sonde résistive transmet directement un signal de sortie de type 0-10V.

A titre indicatif, il peut s'agir de sondes CTN100 ou CTN1000 (sondes consistant en des thermistances dont la résistance diminue de façon uniforme avec la température) ou de sondes PT100 ou PT1000 (sondes constituées d'un filament de platine entourant une tige de verre ou non, dont la caractéristique est de changer de résistance en fonction de la température).

Cette valeur de résistance est directement mesurée par l'automate ou bien transformée en signal analogique 0-10V ou 4-20mA. A titre d'exemple, les parties Y et Z de la figure 2 nous montrent l'évolution de la valeur d'une résistance ou bien d'une sortie 0-10V en fonction de la température extérieure.

Comme représenté sur la figure 1 ci-jointe, si la température extérieure TE mesurée par la première sonde SR est basse, l'automatisme A autorisera l'appareil R à fonctionner pendant une durée déterminée en fonction de la loi de programmation qui lui a été appliquée par l'exploitant.

Conformément à l'invention, le dispositif comprend au moins une sonde de température supplémentaire S1, Sn dont la valeur de la résistance est calée sur une température prédéterminée correspondant, c'est-à-dire associée à un temps limité de fonctionnement du chauffage ou d'absence totale de chauffage (Température dite de « non chauffage »). Contrairement aux sondes de température connues, on assigne à cette sonde une température prédéfinie et un temps limité de chauffage ou d'absence de chauffage.

Selon l'invention, le dispositif de commande comprend également un module B1 qui comporte un microprocesseur qui, lorsqu'il reçoit une information extérieure d'effacement, transmet à un second module B2, qui est en réalité un commutateur, une information de "leurre" lui indiquant qu'il doit passer de la mesure de la première sonde SR vers la mesure de la sonde de température supplémentaire S1, Sn.

Autrement dit, alors qu'en fonctionnement normal, la température extérieure TE réelle relevée par la première sonde SR conditionne le déclenchement des appareils de chauffage R, dans ce cas précis, l'information de température normalement délivrée par cette sonde est ignorée et seule celle délivrée par la sonde de température supplémentaire S1, Sn est prise en compte.

Ainsi, si cette sonde de température supplémentaire S1, Sn est calée sur une température de 20°C, alors cette température correspondra à une durée prédéterminée d'absence de chauffage (TNC : Température de Non Chauffage). En revanche, si ladite sonde est calée sur 10°C, alors cette température correspondra à une durée prédéterminée de chauffage modéré, et en tout état de cause utilisant une énergie de chauffage inférieure à celle qui serait délivrée si l'on tenait compte de la température TE mesurée par la première sonde SR.

A titre d'exemple, et comme représenté sur la figure 2 (parties X et Y), si l'on souhaite couper totalement le chauffage, il suffira de choisir une sonde de température supplémentaire S1, Sn de 1205 ohm pour leurrer l'automate A, valeur qui correspond à la TNC de 20°C.

Le dispositif, s'il est utilisé avec plusieurs sondes de température supplémentaires S1, Sn permet de jouer sur différents temps de fonctionnement de l'appareil de chauffage R, ce qui peut être déterminé en fonction de la valeur de l'ordre d'effacement ainsi que de la limite basse du confort voulu par l'exploitant pendant l'effacement.

Cette information d'effacement i1, i2 peut être directe ou par sollicitation tarifaire et peut être transmise, via une liaison filaire, par un compteur électrique communicant F ou par internet G au module B1.

Par l'expression "compteur électrique communicant", on entend un compteur qui est apte à recevoir et envoyer des données et des ordres sans intervention physique d'un technicien. Installé chez les clients finaux et relié à un centre de supervision, il est en interaction permanente avec le réseau qu'il contribue à rendre "intelligent".

Dans un autre mode de réalisation, la communication avec le module B1 peut se faire par liaison sans fil ou sans ajout de fil (radio ou CPL).

Ainsi, pendant la durée de l'effacement, le module B2 modifie en quelque sorte la température extérieure TE mesurée habituellement par une température extérieure leurrée Tel afin de maitriser la puissance "injectée" dans le bâtiment et, ainsi, trouver le bon compromis entre sollicitation tarifaire ou d'effacement, confort et puissance.

L'invention se prête tout particulièrement aux installations de chauffage électrique existantes faisant usages de convecteurs, de panneaux rayonnants, de planchers et plafonds rayonnant et/ou de ventilo-convecteurs à deux fils (avec batterie électrique) ou bien de système thermodynamique type Pompe à Chaleur.

Selon l'invention, on ne modifie pas le circuit de puissance des appareils de chauffage R. On "leurre" seulement une fonctionnalité qui a déjà ce pouvoir de coupure. Cette solution est par conséquent peu coûteuse (pas de nécessité d'installation de relais de puissance).

Pour récapituler, la présente invention présente les avantages suivants :
- elle est peu intrusive ;
- elle ne nécessite pas d'ajouter des équipements de coupure ;
- elle permet, dans le cas d'utilisation de plusieurs sondes de température supplémentaires, de moduler l'énergie consommée par le chauffage en fonction d'un ordre tarifaire.
- elle ne nécessite pas d'audit initial poussé du système de gestion du chauffage ;
- elle s'adapte facilement aux installations existantes ;
- elle présente peu de risque de perturbation des autres fonctions du système de gestion.

## Revendications

1. Installation de chauffage électrique d'un bâtiment, qui comporte au moins un appareil de chauffage électrique (R) disposé dans ce bâtiment ainsi qu'un automatisme (A), le fonctionnement dudit appareil étant géré par ledit automatisme (A) qui a une fonction de limitation d'énergie, cet automatisme (A) transmettant audit appareil de chauffage (R) des ordres de marche/arrêt, et/ou allures, et/ou consigne de fonctionnement en fonction de la température (TE) détectée à l'extérieur du bâtiment, par une première sonde (SR),
**caractérisée par le fait qu'**elle comprend au moins une sonde de température supplémentaire (S1, Sn) dont la valeur est calée sur une température prédéterminée (TE1, TEn) en combinaison avec un temps de fonctionnement limité du chauffage, voire d'absence de chauffage, ainsi qu'un module (B1) comportant un micro-processeur qui, lorsqu'il reçoit une information extérieure d'effacement (i₁, i₂), est configuré pour transmettre audit appareil (R) par l'intermédiaire d'un second module (B2), un ordre de commutation de la température mesurée (TE) provenant de ladite première sonde (SR) vers une valeur de température extérieure leurrée (TEl), c'est-à-dire imposée, provenant de ladite sonde de température supplémentaire (S1, Sn) pendant une durée prédéterminée.

2. Installation selon la revendication 1, **caractérisée par le fait que** ledit automatisme (A) comprend un programmateur ou un automate.

3. Installation selon l'une des revendications 1 et 2, **caractérisée par le fait que** ladite au moins une sonde de température supplémentaire (S1, Sn) est calée sur une valeur de température supérieure à la première sonde (SR) et inférieure ou égale à une température correspondant à une absence de chauffage.

4. Installation selon l'une des revendications précédentes, **caractérisée par le fait que** lesdites sondes de température (SR, S1, Sn) sont des sondes de température à éléments résistifs ou calée sur une valeur comprise dans la gamme 0-10V.

5. Installation selon l'une des revendications précédentes, **caractérisée par le fait que** ladite information extérieure d'effacement (i₁, i₂) reçue par ledit module (B1) est transmise par une liaison filaire ou sans fil.

6. Installation selon l'une des revendications précédentes, **caractérisée par le fait que** ladite information extérieure d'effacement (i₁, i₂) est transmise par un compteur électrique communicant (F) ou par internet (G).

7. Installation selon l'une des revendications précédentes, **caractérisée par le fait que** ledit appareil électrique (R) est compris dans le groupe suivant : convecteur électrique, radiateur/panneau rayonnant électrique, radiateur à inertie, plancher et plafond à chauffage électrique intégré ou bien système thermodynamique type Pompe à Chaleur.

8. Dispositif de commande d'au moins un appareil de chauffage électrique (R) disposé dans un bâtiment comprenant un automatisme (A), le fonctionnement dudit appareil étant géré par ledit automatisme (A) ayant une fonction de limitation d'énergie, cet automatisme (A) transmettant audit appareil de chauffage (R) des ordres de marche/arrêt, et/ou allures, et/ou consigne de fonctionnement en fonction de la température (TE) détectée à l'extérieur du bâtiment, par une première sonde (SR),
**caractérisé par le fait qu'**il comprend au moins une sonde de température supplémentaire (S1, Sn) dont la valeur est calée sur une température prédéterminée (TE1, TEn) en combinaison avec un temps de fonctionnement limité du chauffage, voire d'absence de chauffage, ainsi qu'un module (B1) comportant un micro-processeur qui, lorsqu'il reçoit une information extérieure d'effacement (i₁, i₂), est configuré pour transmettre audit appareil (R) par l'intermédiaire d'un second module (B2), un ordre de commutation de la température mesurée (TE) provenant de ladite première sonde (SR) vers une valeur de température extérieure leurrée (TEl), c'est-à-dire imposée, provenant de ladite sonde de température supplémentaire (S1, Sn) pendant une durée prédéterminée.

## Patentansprüche

1. Elektrische Heizanlage eines Gebäudes, die wenigstens eine elektrische Heizeinrichtung (R) aufweist, die in diesem Gebäude angeordnet ist, sowie eine Automatik (A), wobei der Betrieb der Einrichtung von der Automatik (A) verwaltet wird, die eine Energiebegrenzungsfunktion hat, wobei diese Automatik (A) an die Heizeinrichtung (R) Ein-Aus- und/oder Gang- und/oder Betriebssollwert-Befehle in Abhängigkeit von der außerhalb des Gebäudes ermittelten Temperatur (TE) übermittelt, durch eine erste Sonde (SR),
**dadurch gekennzeichnet, dass** sie wenigstens eine zusätzliche Temperatursonde (S1, Sn) umfasst, deren Wert auf eine vorher festgelegte Temperatur (TE1, TEn) in Kombination mit einer begrenzten Betriebszeit der Heizung, ja sogar Abwesenheit von Heizung, festgestellt ist, sowie ein Modul (B1), aufweisend einen Mikroprozessor, der, wenn er eine Korrekturinformation (i₁, i₂) von außen erhält, konfiguriert ist, um der Einrichtung (R) über ein zweites Modul (B2) einen Umschaltbefehl der gemessenen Temperatur (TE) von der ersten Sonde (SR) auf einen vorgetäuschten, das heißt geforderten, äußeren Temperaturwert (TEl) von der zusätzlichen Temperatursonde (S1, Sn) während einer vorher festgelegten Dauer zu übermitteln.

2. Anlage nach Anspruch 1, **dadurch gekennzeichnet, dass** die Automatik (A) eine Programmiereinrichtung oder eine Automatik umfasst.

3. Anlage nach einem der Ansprüche 1 und 2, **dadurch gekennzeichnet, dass** die wenigstens eine zusätzliche Temperatursonde (S1, Sn) auf einen Temperaturwert festgestellt ist, der über der ersten Sonde (SR) und kleiner oder gleich einer Temperatur ist, die einer Abwesenheit von Heizung entspricht.

4. Anlage nach einem der vorangehenden Ansprüche, **dadurch gekennzeichnet, dass** die Temperatursonden (SR, S1, Sn) Temperatursonden mit resistiven Elementen oder auf einen Wert festgelegte sind, der im Bereich 0-10 V liegt.

5. Anlage nach einem der vorangehenden Ansprüche, **dadurch gekennzeichnet, dass** die Korrekturinformation (i₁, i₂) von außen, die von dem Modul (B1) empfangen wird, durch eine drahtgebundene oder drahtlose Verbindung übermittelt wird.

6. Anlage nach einem der vorangehenden Ansprüche, **dadurch gekennzeichnet, dass** die Korrekturinformation (i₁, i₂) von außen durch einen kommunizierenden elektrischen Zähler (F) oder durch Internet (G) übermittelt wird.

7. Anlage nach einem der vorangehenden Ansprüche, **dadurch gekennzeichnet, dass** die elektrische Einrichtung (R) in der folgenden Gruppe inbegriffen ist: elektrischer Konvektor, Radiator/elektrische strahlende Platte, Trägheitsradiator, Fußboden und Decke mit integrierter elektrischer Heizung oder auch thermodynamisches System vom Typ Wärmepumpe.

8. Steuervorrichtung wenigstens einer elektrischen Heizeinrichtung (R), die in einem Gebäude angeordnet ist, deren Betrieb von einer Automatik (A) verwaltet wird, die eine Energiebegrenzungsfunktion hat, wobei diese Automatik (A) an die Heizeinrichtung (R) Ein-Aus- und/oder Gang- und/oder Betriebssollwert-Befehle in Abhängigkeit von der außerhalb des Gebäudes ermittelten Temperatur (TE) übermittelt, durch eine erste Sonde (SR),
**dadurch gekennzeichnet, dass** sie wenigstens eine zusätzliche Temperatursonde (S1, Sn) umfasst, deren Wert auf eine vorher festgelegte Temperatur (TE1, TEn) in Kombination mit einer begrenzten Betriebszeit der Heizung, ja sogar Abwesenheit von Heizung, festgestellt ist, sowie ein Modul (B1), aufweisend einen Mikroprozessor, der, wenn er eine Korrekturinformation (i₁, i₂) von außen erhält, konfiguriert ist, um der Einrichtung (R) über ein zweites Modul (B2) einen Umschaltbefehl der gemessenen Temperatur (TE) von der ersten Sonde (SR) auf einen vorgetäuschten, das heißt geforderten, äußeren Temperaturwert (TEl) von der zusätzlichen Temperatursonde (S1, Sn) während einer vorher festgelegten Dauer zu übermitteln.

## Claims

1. An electrical heating installation of a building, which includes at least one electrical heating appliance (R) disposed in this building and an automatic facility (A), the operation of said appliance being managed by said automatic facility (A) which has an energy limitation function, this automatic facility (A) transmitting to said heating appliance (R) on/off, and/or speed, and/or operating setpoint commands as a function of the temperature (TE) detected outside the building, by a first probe (SR),
**characterized by** the fact that it comprises at least one additional temperature probe (S1, Sn) the value of which is set to a predetermined temperature (TE1, TEn) in combination with a limited operating time of the heating, or even of the absence of heating, as well as a module (B1) including a microprocessor which, when receiving an outside erase information (i₁; i₂) is configured to transmit to said appliance (R) via a second module (B2), a command for switching the measured temperature (TE) originating from said first probe (SR) to a decoyed, that is to say imposed, outside temperature (TEl) value, originating from said additional temperature probe (S1, Sn) for a predetermined duration.

2. The installation according to claim 1, **characterized by** the fact that said automatic facility (A) comprises a programmer or an automatic machine.

3. The installation according to any of claims 1 and 2, **characterized by** the fact that the at least one additional temperature sensor (S1, Sn) is set to a temperature value higher than the first probe (SR) and less than or equal to a temperature corresponding to an absence of heating.

4. The installation according to any of the preceding claims, **characterized by** the fact that said temperature probes (SR, S1, Sn) are temperature probes with resistive elements or set to a value comprised in the range 0-10V.

5. The installation according to any of the preceding claims, **characterized by** the fact that said outside erase information (i₁; i₂) received by said module (B1) is transmitted by a wired or wireless connection.

6. The installation according to any of the preceding claims, **characterized by** the fact that said outside erase information (i₁, i₂) is transmitted by a communicating electric meter (F) or by Internet (G).

7. The installation according to any of the preceding claims, **characterized by** the fact that said electrical appliance (R) is comprised in the following group: electric convector, electric radiator/radiating panel, inertia radiator, floor and ceiling with integrated electrical heating or Heat Pump type thermodynamic system.

8. A device for controlling at least one electrical heating appliance (R) disposed in a building comprising an automatic facility (A), the operation of said appliance being managed by said automatic facility (A) having an energy limitation function, this automatic facility (A) transmitting to said heating appliance (R) on/off, and/or speed, and/or operating setpoint commands as a function of the temperature (TE) detected outside the building, by a first probe (SR),
**characterized by** the fact that it comprises at least one additional temperature probe (S1, Sn) the value of which is set to a predetermined temperature (TE1, TEn) in combination with a limited operating time of the heating, or even of the absence of heating, as well as a module (B1) including a microprocessor which, when receiving an outside erase information (i₁; i₂) is configured to transmit to said appliance (R) via a second module (B2), a command for switching the measured temperature (TE) originating from said first probe (SR) to a decoyed, that is to say imposed, outside temperature (TEl) value, originating from said additional temperature probe (S1, Sn) for a predetermined duration.
